(19) **Europäisches Patentamt**
**European Patent Office**
**Office européen des brevets**

(11) **EP 3 333 787 A1**

(12) **EUROPEAN PATENT APPLICATION**

(43) Date of publication:
**13.06.2018 Bulletin 2018/24**

(51) Int Cl.:
**G06Q 10/10** (2012.01)

(21) Application number: **17198439.6**

(22) Date of filing: **26.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.12.2016 IN 201621042143**

(71) Applicant: **Tata Consultancy Services Limited Maharashtra (IN)**

(72) Inventors:
- **RAI, Youthika Jagadish**
  **411028 Pune, Maharashtra (IN)**
- **BARAD, Vishal**
  **382009 Gandhinagar - Gujarat (IN)**
- **MUJUMDAR, Pallavi**
  **400093 Mumbai, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR AUTOMATING DECISION MAKING FOR INSTANCES RECORDED WITHIN AN ORGANIZATION**

(57) A method and system for automating decision making for instances recorded within an organization is disclosed. The method includes receiving a list of pre-defined categories and thresholds like span threshold, location threshold and size threshold. Further receiving the instances and analysing the instances to determine a span value, location value and size value for the instances received. Subsequently comparing the span value, location value and size value with span threshold, location threshold and size threshold. Subsequently, tagging the instances to the pre-defined categories and subsequently automating decision making for an organization.

```
┌─────────────────────────────────────────┐
│ Receiving a list of predefined categories │──── 302
│ and threshold for span, location and size │
└─────────────────────────────────────────┘
                    │
                    ▼
┌─────────────────────────────────────────┐
│ Receiving one or more instances           │──── 304
└─────────────────────────────────────────┘
                    │
                    ▼
┌─────────────────────────────────────────┐
│ Analysing instances and determining span  │──── 306
│ value, location value and size value       │
└─────────────────────────────────────────┘
                    │
                    ▼
┌─────────────────────────────────────────┐
│ comparing span value, location value and   │──── 308
│ size value with span threshold, location   │
│ threshold and size threshold                │
└─────────────────────────────────────────┘
                    │
                    ▼
┌─────────────────────────────────────────┐
│ tagging the instances to pre-defined       │──── 310
│ categories and determining a decision      │
└─────────────────────────────────────────┘
                                        └── 300
```

FIG. 3

EP 3 333 787 A1

**Description**

PRIORITY

The present invention claims priority to Indian specification (Title: System and method for automating decision making for instances recorded within an organization) No. 210621042143, filed in India on December 9, 2016.

TECHNICAL FIELD

The disclosure herein generally relates to automating decision making, and more particularly to system and method for automating decision making for instances recorded within an organization.

BACKGROUND

Generally, in an organization a number of decisions are made regarding an entity. The decisions can include the items to be purchased in an organization, trainings to be taken by the employees of the organization and other decisions. The decisions are made by the management of the organization by considering many factors. For example, an organization would have a numerous catalogue of course training that need to be taken by the employees of the organization. However, all the course need not be taken by all the employees of the organization. The courses to be undertaken by an employee depends on the profile of the employee and other factors. Therefore, the decision to assign a course to an employee is made by the management.

SUMMARY

Embodiments of the present disclosure present technological improvements as solutions to one or more of the above-mentioned technical problems recognized by the inventors in conventional systems. For example, in one embodiment, a method for automating decision making for instances recorded within an organization is disclosed. The method includes receiving a list of one or more pre-defined categories that are tagged with one or more decisions of the organization along with a span threshold, a location threshold and a size threshold for each of the one or more pre-defined categories. Further, one or more instances are received by the system. Subsequently, one or more recorded instances are analysed to determine a span value, a location value and a size value, wherein location value is determined by computing a dynamic weight to one or more locations based on the one or more instances received. Further, comparing the span value, the location value and the size value with corresponding span threshold, location threshold and size threshold with pre-defined categories stored in memory. Subsequently, one or more instances are tagged to one or more pre-defined categories based on the comparison and a decision is determined for the organization based on the instances tagged to one or more pre-defined categories.

In another embodiment, a system automating decision making for instances recorded within an organization is disclosed. The system includes at least one processor, and a memory communicatively coupled to the at least one processor, wherein the memory comprises of several modules. The modules include automating decision making module that automates decision making for instances received within an organization. The module receives a list of one or more pre-defined categories tagged with one or more decisions of the organization along with a span threshold, a location threshold and a size threshold for each of the one or more pre-defined categories of one or more instances. Further the module receives one or more instances. Subsequently, one or more recorded instances are analysed to determine a span value, a location value and a size value, wherein location value is determined by computing a dynamic weight to one or more locations based on the one or more instances received. Further, comparing the span value, the location value and the size value with corresponding span threshold, location threshold and size threshold with pre-defined categories stored in memory. Subsequently, one or more instances are tagged to one or more pre-defined categories based on the comparision and a decision is determined for the organization based on the instances tagged to one or more pre-defined categories.

In yet another embodiment, a non-transitory computer readable medium embodying a program executable in a computing device is disclosed. The program receives a list of one or more pre-defined categories tagged with one or more decisions of the organization along with a span threshold, a location threshold and a size threshold for each of the one or more pre-defined categories of one or more instances. Further the module receives one or more instances. Subsequently, one or more recorded instances are analysed to determine a span value, a location value and a size value, wherein location value is determined by computing a dynamic weight to one or more locations based on the one or more instances received. Further, comparing the span value, the location value and the size value with corresponding span threshold, location threshold and size threshold with pre-defined categories stored in memory. Subsequently, one or more instances are tagged to one or more pre-defined categories based on the comparison and a decision is determined for the organization based on the instances tagged to one or more pre-defined categories.

It is to be understood that both the foregoing general description and the following detailed description are explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for automating a decision making for instances recorded within an organization, according to some embodiments of the present subject matter;
FIG. 2 is a flow chart illustrating the requirement of a training course for the employees in an organization, according to some embodiment of the present subject matter; and
FIG. 3 is a flow chart illustrating a method for automating decision making for instances recorded within an organization.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

In one aspect, the present description discloses a method for automating the decision making without human intervention in an organization. The method includes receiving the instances of request for a process in an organization. The system also receive span threshold, size threshold and location threshold along with categories. Further the instances are analysed based on span analysis, size analysis and location analysis to determine a span value, a size value and a location value. Comparing the span value, size value and location value with the span threshold, size threshold and location threshold. Based on the comparison, categorizing the instances received in an organization. The method of computation is explained in the following description.

The manner in which the described system is implemented to automate decision making for the instances recorded within an organization with respect to the following figure(s). While aspects of the described system can be implemented in any number of different computing systems, transmission environments, and/or configurations, the embodiments are described in the context of the following exemplary system.

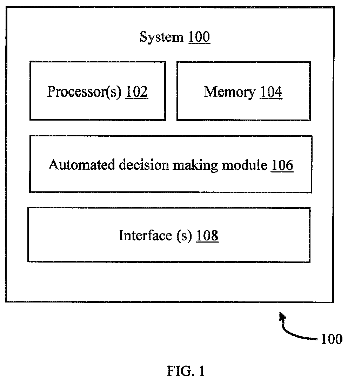

FIG. 1 schematically illustrates a system 100 for automating decision making for instances recorded within an organization, according to an embodiment of the present disclosure. As shown in FIG. 1, the system 100 includes one or more processor(s) 102 and a memory 104 communicatively coupled to each other. The memory 104 includes an automated decision making module 106 that analyses the instances based on span, location and size and automates the decision making. The system 100 also includes interface(s) 108. Although FIG. 1 shows example components of the system 100, in other implementations, the system 100 may contain fewer components, additional components, different components, or differently arranged components than depicted in FIG. 1.

The processor(s) 102 and the memory 104 may be communicatively coupled by a system bus. The processor(s) 102 may include circuitry implementing, among others, audio and logic functions associated with the communication. The processor 102 may include, among other things, a clock, an arithmetic logic unit (ALU) and logic gates configured to support operation of the processor(s) 102. The processor(s) 102 can be a single processing unit or a number of units, all of which include multiple computing units. The processor(s) 102 may be implemented as one or more microprocessors, microcomputers, microcontrollers, digital signal processors, central processing units, state machines, logic circuitries, and/or any devices that manipulate signals based on operational instructions. Among other capabilities, the processor(s) 102 is configured to fetch and execute computer-readable instructions and data stored in the memory 104.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional, and/or custom, may also be included.

The interface(s) 108 may include a variety of software and hardware interfaces, for example, interfaces for peripheral device(s), such as a keyboard, a mouse, an external memory, and a printer. The interface(s) 108 can facilitate multiple communications within a wide variety of networks and protocol types, including wired networks, for example, local area network (LAN), cable, etc., and wireless networks, such as Wireless LAN (WLAN), cellular, or satellite. For the purpose, the interface(s) 108 may include one or more ports for connecting the system 100 to other network devices.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 104, may store any number of pieces of information, and data, used by the system 100 to automate decision making for an organization. The memory 104 may be configured to store information, data, applications, instructions or the like for system 100 to carry out various functions in accordance with various example embodiments. Additionally or alternatively, the memory 104 may be configured to store instructions which when executed by the processor 102 causes the system 100 to behave in a manner as described in various embodiments. The memory 104 includes the automated decision making module 106 and other modules. The module 106 include routines, programs, objects, components, data structures, etc., which perform particular tasks or implement particular abstract data types.

Generally, in an organization, there are a plurality of instances received for an entity. The examples of entities are items to be purchased in an organization, trainings to be taken by the employees of the organization. The instances that are received by the system are recorded in the system. The recorded instances for the entity are analysed to determine if the instance is received for the entity for the first time or the instance is a repeated instance. A span value, a location value and a size value is determined by performing the span analysis, location analysis and the size analysis on the instances received in the organization. A span threshold, location threshold and a size threshold are received in the system 100 and stored in the memory 104. One or more categories are also received with respect to the span threshold, location threshold and the size threshold. The span value, the location value and the size value are compared with the span threshold, the location threshold and the size threshold. Based on the comparison, the instances are tagged to one of the categories. Subsequently, decisions are made in an organization based on the instances tagged in an entity.

In an embodiment, the instances are analysed based on the span, location and size of the instance. The span analysis is performed on the instances received in the entity to obtain a span value. The span analysis refers to the analysis of the span between the instances recorded based on the defined parameters. The parameters include average time between two records or a weightage assigned to each record based on specific time when record was inserted or combination of both. The span value is determined by calculating number of instances per number of days from the first instance received for the entity.

$$\text{Span Value} = \text{number of records} \, / \, \text{days starting from the first instance received}$$

In an embodiment, the location analysis is performed on the instances received for the entity to obtain the location value. The location analysis refers to the analysis of the location of the instances received. The examples include store location where item is purchased, city of the customer, training location, etc. The location analysis is performed by assigning a dynamic weightage to the locations. Dynamic weightage includes increasing or decreasing the weightage to a location based on categorized instances from specific locations.

The dynamic weightage of a location is utilized to assign a dynamic value to each of the locations. The dynamic location varies based on frequency of instances for a specific location that are categorized as high or medium or low items from. The dynamic weightage is utilized for determining a decision in an organization based on the frequency of instances received in a location. The dynamic weightage is calculated based on the below mentioned formula.

$$\text{Dynamic weightage} = \text{high items} * 0.6 + \text{medium items} * 0.25 + \text{low items} * 0.15$$

An example for determining dynamic weightage for a location is disclosed in the following table.

| Location | High Items | Medium Items | Low Items | Dynamic Weightage |
|---|---|---|---|---|
| X | 4 | 3 | 1 | 3.3 |
| Y | 3 | 2 | 1 | 2.45 |

(continued)

| Location | High Items | Medium Items | Low Items | Dynamic Weightage |
|----------|-----------|--------------|-----------|-------------------|
| Z | 2 | 3 | 3 | 2.4 |
| A | 1 | 2 | 4 | 1.7 |

Further, the weightage of locations of the one or more instances are summed and compared with the location threshold. Based on the comparison, system 100 decides if the size analysis has to be performed. In an embodiment of the present disclosure, when the sum of location weightages is more than location threshold, the size analysis is performed. However, if the sum of location weightages is less than location threshold, the process ends (or may be terminated).

In an embodiment, the method for size analysis is disclosed. The size analysis refers to analysis of instance size parameter. The examples of size analysis include determining number of same item purchased in bulk, trainee counts per training instance, number of different items purchased by customer etc. Size analysis includes determine size value of the instances received in a particular entity. Size value is the sum of the instance quantity considered for an each entity.

Subsequently, size parameters are summed and compared with the size threshold. Based on the comparison, the system 100 determines if the instance qualifies for a specific pre-defined category.

Therefore, below table gives an example of the span value, the location value and the size value for instances received in the entity.

| Item Code | Date | Purchased Quantity | Store Location | Span Value | Location Value | Size Value | Category |
|-----------|------|-------------------|----------------|-----------|----------------|-----------|----------|
| 1 | 1-Apr | 10 | X | 1 | 3.3 | 10 | Low |
| 1 | 3-Apr | 5 | Y | 1.5 | 5.75 | 15 | Low |
| 1 | 4-Apr | 5 | x | 1.33 | 9.05 | 20 | Low |
| 1 | 7-Apr | 4 | Y | 1.75 | 11.5 | 24 | Medium |
| 1 | 8-Apr | 3 | Z | 1.6 | 13.9 | 27 | Medium |
| 1 | **12-Apr** | **10** | **A** | **2** | **15.6** | **37** | **High** |
| 1 | **13-Apr** | **5** | **Y** | **1.86** | **18.05** | **42** | **High** |

Based on the comparison, each item from a specific location is tagged to one of the predefined categories stored in the memory 104. The predefined categories are tagged to one of the business decisions in an organization. Therefore, a decision is made in an organization based on the predefined categories tagged to the one or more instances.

In the present disclosure, an example for a training to be taken by the employee of the organization is considered. The details recorded for the instances received in an organization are training title, category, assessment details and repeat request count. For each of the training, the training details are considered. The training details are project details, location details, trainer details, start date, end date, number of hours and attendees. Some of the parameters i.e., details remain constant, through-out the process. However, some of the details vary along the process.

In the present example, frequency of the repeated requests of a training is to be determined. The size analysis, location analysis and frequency of the repeated requests is utilized. The system updates the repeat request count after every new repeat request count is received by the system. Frequency of repeated requests to be analysed and categorized as high or moderate as and when repeat request count is updated.

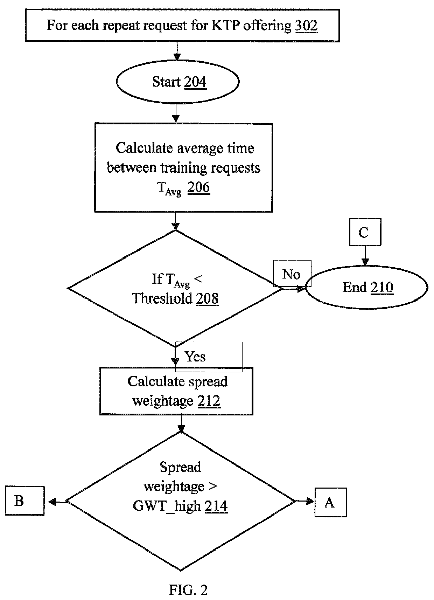

FIG. 2 is a flow chart illustrating the requirement of a training course for the employees in an organization. The inputs considered from the organization are calculation logic for $T_{Avg}$ threshold, weightage for each geography, the geography weightage threshold for high GWT_high, the geography weightage for moderate GWT_moderate, training request count for high CNT_high, training request count for moderate CNT_moderate, number of attendees for high ATT_high and number of attendees for moderate ATT_moderate. At block 202, each repeat request for KTP (Knowledge Transfer Partnership) offering is recorded. Further at block 204, the procedure for determining the requirement for a training course is determined. At block 206, average time between the two requests received by the system $T_{Avg}$ is determined. At block 208, the $T_{Avg}$ is compared with the $T_{Avg}$ threshold. If the $T_{Avg}$ is less than $T_{Avg}$ threshold, a spread weightage is calculated at block 212. The spread weightage is the summation of the weightages given to all the geographies. If the $T_{Avg}$ is not less than $T_{Avg}$ threshold, then the process ends at block 210. Further at block 214, spread weightage is compared with GWT_high. If spread weightage is greater than GWT_high, training counter is compared with CNT_high at block 218. However, if spread weightage is less that GWT_high, then spread weightage is compared with GWT_moderate at block 216. If the spread weightage is less than GWT_moderate at block 216, the process ends at block 210. However, if spread weightage is greater than GWT moderate, training counter of the system is compared with CNT_moderate given by the organization at block 220. If training counter is less than CNT_moderate, the process ends at block 210. However, if training counter is greater than CNT_moderate, total attendees is compared with the ATT_moderate at block 222. If total attendees till date is greater than ATT_moderate, then the training course requirement is considered as moderate. Otherwise, the process ends. However, in the comparison at block 218, the training counter is greater than CNT_high, total attendees till date are compared with ATT_high at block 224. If in the comparison at block 218, the training counter is less than CNT_high, the process ends at block 210. At block 224, in the comparison, if the total number of attendees till date is greater than ATT high, then the training course requirement is determined as high. However, if the total number of attendees till date is less than ATT_high, then the process ends at block 210.

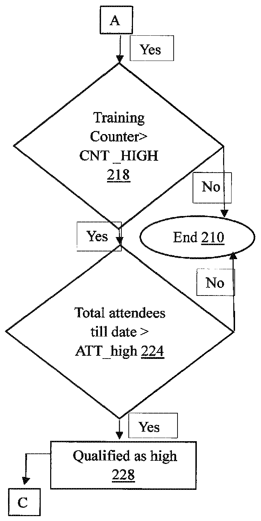

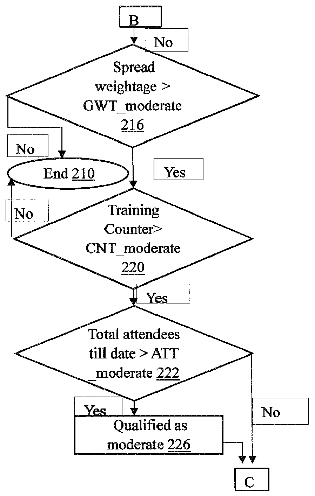

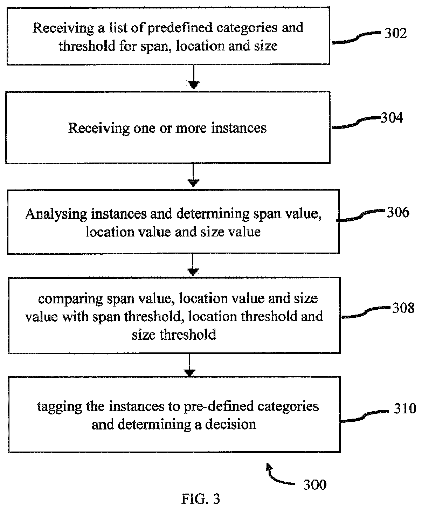

FIG. 3 is a flowchart illustrating a method for automating decision making for instances recorded within an organization. At block 302, the system 100 receives a list of predefined categories and threshold for span, location and size from the organization. Further, at block 304, one or more instances are received. At block 306, the instances are analysed to determine the span value, location value and size value. Subsequently, the span value, location value and the size value are compared with span threshold, location threshold and size threshold at block 308. Subsequently, at block 310, one or more instances are tagged to pre-defined categories and determining a decision within an organization.

The technical challenge the present disclosure addresses is analyzing the instances received by the organization to determine a decision for the organization. The present disclosure determines a decision based on the span analysis, location analysis and size analysis of the instances. The method disclosed in the present disclosure provides a better throughput by utilizing dynamic weightage to locations for performing location analysis.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant arts based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A method for automating decision making for instances recorded within an organization, the method comprising of:

> receiving a list of one or more pre-defined categories tagged with one or more decisions of the organization along with a span threshold, a location threshold and a size threshold for each of the one or more pre-defined categories of one or more instances;
> receiving one or more instances;
> analysing the one or more recorded instances to determine a span value, a location value and a size value of each instance, wherein the location value is determined by computing a dynamic weight to one or more locations based on the one or more instances received;
> performing a comparison of (i) the span value, the location value and the size value of the one or more instance, with (ii) a corresponding span threshold, a corresponding location threshold, and a corresponding size threshold associated with the pre-defined categories stored in a memory;
> tagging the one or more instances to one or more pre-defined categories based on the comparison; and
> determining a decision for the organization based on the one or more instances tagged to one or more pre-defined categories.

2. The method according to claim 1, wherein the span value is determined by analysing time span between the instances recorded.

3. The method according to claim 1, wherein the size value is determined by analysing quantity of the one or more instances recorded.

4. A system (100) for automating decision making for instances recorded within an organization, the system comprising of:

> at least one processor (102); and
> a memory (104) communicatively coupled to the at least one processor, wherein the memory comprises an automated decision making module (106) to :

> > receive a list of one or more pre-defined categories tagged with one or more decisions of the organization along with a span threshold, a location threshold and a size threshold for each of the one or more pre-defined categories of one or more instances;
> > receive one or more instances;
> > analyse the one or more recorded instances to determine a span value, a location value and a size value of each instance, wherein the location value is determined by computing a dynamic weight to one or more locations based on the one or more instances received;
> > perform a comparison of (i) the span value, the location value and the size value of the one or more instance, with (ii) a corresponding span threshold, a corresponding location threshold, and a corresponding size threshold associated with the pre-defined categories stored in a memory;
> > tag the one or more instances to one or more pre-defined categories based on the comparison; and
> > determine a decision for the organization based on the one or more instances tagged to one or more pre-defined categories.

5. The system according to claim 4, wherein the span value is determined by analysing time span between the instances recorded.

6. The system according to claim 4, wherein the size value is determined by analysing quantity of the one or more instances recorded.

7. A non-transitory computer readable medium embodying a program executable in a computing device , the program comprising:

a program code for receiving a list of one or more pre-defined categories tagged with one or more decisions of the organization along with a span threshold, a location threshold and a size threshold for each of the one or more pre-defined categories of one or more instances;

receiving one or more instances;

analysing the one or more recorded instances to determine a span value, a location value and a size value of each instance, wherein the location value is determined by computing a dynamic weight to one or more locations based on the one or more instances received;

performing a comparison of (i) the span value, the location value and the size value of the one or more instance, with (ii) a corresponding span threshold, a corresponding location threshold, and a corresponding size threshold associated with the pre-defined categories stored in a memory;

tagging the one or more instances to one or more pre-defined categories based on the comparison; and

determining a decision for the organization based on the one or more instances tagged to one or more pre-defined categories.

System 100

Processor(s) 102

Memory 104

Automated decision making module 106

Interface (s) 108

100

FIG. 1

For each repeat request for KTP offering 302

Start 204

Calculate average time
between training requests
$T_{Avg}$ 206

If $T_{Avg}$ <
Threshold 208

No → End 210

C

Yes

Calculate spread
weightage 212

Spread
weightage >
GWT_high 214

B ←

→ A

FIG. 2

A

Yes

Training
Counter>
CNT_HIGH
218

No

Yes

End 210

No

Total attendees
till date >
ATT_high 224

Yes

Qualified as high
228

C

EP 3 333 787 A1

B

No

Spread weightage > GWT_moderate 216

No

End 210

Yes

No

Training Counter> CNT_moderate 220

Yes

Total attendees till date > ATT _moderate 222

Yes

No

Qualified as moderate 226

C

Receiving a list of predefined categories and threshold for span, location and size — 302

Receiving one or more instances — 304

Analysing instances and determining span value, location value and size value — 306

comparing span value, location value and size value with span threshold, location threshold and size threshold — 308

tagging the instances to pre-defined categories and determining a decision — 310

300

FIG. 3

Europäisches
Patentamt

European
Patent Office

Office européen
des brevets

# EUROPEAN SEARCH REPORT

Application Number

EP 17 19 8439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/324519 A1 (DENNIS PAMELA R [US] ET AL) 30 October 2014 (2014-10-30) * abstract * * paragraphs [0019] - [0022], [0031] - [0040]; figure 1 * | 1-7 | INV. G06Q10/10 |
| X | US 2016/232466 A1 (KUMAR JAIN RITESH [IN] ET AL) 11 August 2016 (2016-08-11) * abstract * * paragraphs [0022] - [0087]; figures 1,2 * | 1-7 | |
| X | US 2008/288305 A1 (LALUZERNE JOSEPH D [US] ET AL) 20 November 2008 (2008-11-20) * abstract * * paragraphs [0002], [0011] - [0024]; figure 3 * | 1-7 | |
| X | GB 2 505 220 A (IBM [US]) 26 February 2014 (2014-02-26) * abstract * * page 3 - page 14; figures 2-4 * | 1-7 | TECHNICAL FIELDS SEARCHED (IPC) |
| X | EP 2 575 102 A1 (TATA CONSULTANCY SERVICES LTD [IN]) 3 April 2013 (2013-04-03) * abstract * * paragraphs [0009] - [0060]; figure 1 * | 1-7 | G06Q |

The present search report has been drawn up for all claims

| Place of search | Date of completion of the search | Examiner |
|---|---|---|
| Munich | 16 February 2018 | Fyhr, Jonas |

EPO FORM 1503 03.82 (P04C01)

## ANNEX TO THE EUROPEAN SEARCH REPORT
## ON EUROPEAN PATENT APPLICATION NO.

EP 17 19 8439

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2018

| Patent document cited in search report | | | Publication date | Patent family member(s) | | Publication date |
|---|---|---|---|---|---|---|
| US 2014324519 | A1 | | 30-10-2014 | NONE | | |
| US 2016232466 | A1 | | 11-08-2016 | NONE | | |
| US 2008288305 | A1 | | 20-11-2008 | NONE | | |
| GB 2505220 | A | | 26-02-2014 | CN 103631848 A | | 12-03-2014 |
| | | | | GB 2505220 A | | 26-02-2014 |
| | | | | US 2014058995 A1 | | 27-02-2014 |
| EP 2575102 | A1 | | 03-04-2013 | EP 2575102 A1 | | 03-04-2013 |
| | | | | US 2013085917 A1 | | 04-04-2013 |

EPO FORM P0459

For more details about this annex : see Official Journal of the European Patent Office, No. 12/82

**REFERENCES CITED IN THE DESCRIPTION**

**Patent documents cited in the description**

- IN 210621042143